# EUROPEAN PATENT APPLICATION

(11) **EP 4 832 343 A1**
(43) Date of publication of application: **28.10.2026**
(21) Application number: 23962083.4
(22) Date of filing: 21.12.2023
(51) Int. Cl.: H02S 20/32, H02S 40/00, F16F 15/08, F24S 40/00, F24S 30/425, F24S 25/12

(54) **DAMPED BEARING ASSEMBLY FOR SOLAR TRACKERS**

(71) Applicant: Trina Solar Spain, S.L.U., 28050 Madrid (ES)
(72) Inventor: TOBALINA BALDEON, Daniel, 28050 Madrid (ES)
(74) Representative: Evens, Paul Jonathan
(86) International application number: PCT/ES2023/070771
(87) International publication number: WO 2025/133412

(57) **Abstract**

The present invention relates to a bearing assembly for solar tracker rotary profiles comprising a bearing bracket, which is attached to a support pillar, and a rolling mount. The bearing assembly comprises a sleeve interposed between the rolling mount and the rotary profile. The sleeve is a damping element so that it absorbs impacts between the rolling mount and the rotary profile in the relative accelerations between the two structural elements. The surfaces of the damping sleeve and/or rotary profile which are intended to be in contact with each other may comprise an adhesive to facilitate installation and operation tasks. The damping sleeve may comprise one or more grooves at its two longitudinal ends. **In** the case of a single groove, the groove may run along the entire perimeter contour of the edge surrounding the rotary profile, closing in on itself.

## Description

### Technical field

The present invention relates to the technical field of solar trackers used to guide photovoltaic panels or modules. More specifically, the invention relates to the sector of the bearing assemblies that connect the rotary profile on which the solar panels or plates are supported and the grounding support pillar or pillars of said rotary profile.

### State of the art

Solar trackers support a photovoltaic panel or array of panels so as to allow tracking of incident sunlight as the direction of projection thereof varies with the movement of the sun over the horizon; tracking which, as is known, is intended to optimise the energy efficiency of the conversion of solar energy into electrical energy through proper positioning of the surface plane of the solar panels with respect to the direction of incidence of the solar energy. For this purpose, said solar trackers are made up, basically and for illustrative purposes only, of a grounding support structure (normally several support pillars or columns, generally vertical), a support frame for the solar panels in direct contact with the latter, and one or more rotary profiles that must rotatably connect those support frames to the support pillars in order to equip the solar panels with the desired rotational tracking capacity. For this rotary connection, bearing assemblies are used which are well known in the industry. This introduction concerning the structures that make up the solar trackers is only an example and there may be other different ones, with a greater or lesser degree of similarity, it being understood, from the following exposition, that the essential aspect is centred on the bearing assembly included in said structures, so the other elements thereof may vary.

In the transmission of this rotary tracking movement between the solar panels (which must pivot or rotate following the sun) and the fixed support structure, accelerations (positive and negative) occur at the start or stop of the movement and from eventual conditions, such as wind gusts. These accelerations have an effect on the mechanical components involved in the transmission, and which have only been outlined in the previous paragraph, such that they affect the durability and correct operation of the trackers; this, in turn, has consequences on the productivity of the companies dedicated to the maintenance and repair of these pieces of equipment in terms of time and the cost of the material/spare parts that must be used in these tasks. Any kind of solution or improvement that contributes to a smoother relative motion, with as little abruptness as possible, between tracker components that have substantial acceleration differences therebetween at different times during operation is therefore desirable.

Thus, the present invention aims at a bearing assembly that alleviates the stresses or impacts that occur between the rotary profile of the solar trackers and the structure that is firmly fixed to the ground or the terrain. The bearing assembly is applicable to the currently used rotary profiles and is installed at the same time as the respective solar tracker assembly. As will become clear from the detailed description below, another application could foresee that the novel technical elements included in this bearing could be applied to solar trackers that are already installed and in operation.

### Object of the invention

Taking into account the operating conditions and objectives outlined in the previous section, a bearing assembly for solar tracker rotary profiles has been devised. This type of bearing comprises a bearing bracket, which is attached to a support pillar for supporting on the ground, and a rolling mount adapted to rotate relative to the bearing bracket and to support a rotary profile so as to communicate the corresponding rotational movement to the latter. In this case, the bearing assembly also comprises a sleeve that is interposed between the rolling mount and the rotary profile; the sleeve is a damping element or component, i.e. it is adapted to absorb impacts that would normally occur between the rolling mount and the rotary profile in the relative accelerations between the two structural elements. The rolling mount is of any type known in the art, for example, in the form of two hemispheres as in the case used here to illustrate the invention; however, its specific embodiment does not affect the essence of the features disclosed in this document, which refer to the interposition of this damping sleeve regardless of the specific shapes of the mount, the rotary profile, the bearing bracket or any other structural element of the tracker. By its definition as a "damping" sleeve, it is also understood that there will have to be some direct or indirect contact with both the rotary profile and the rolling mount in order for the absorption of relative shocks or sudden movements to take place.

According to a feature of the invention, the surfaces of the damping sleeve and/or of the rotary profile which are intended to be in mutual contact may have or receive a certain amount of one or more bonding agents on part or all of those surfaces, in order to facilitate installation and operation tasks as will be seen in more detail later.

According to another feature of the damping sleeve of the invention, it may comprise one or more grooves on one or both edges defining the contours of the sleeve at its two longitudinal ends. That is, the sleeve has two inlet/outlet ends of the rotary profile and these two ends have a contour, with a certain thickness, which totally or partially surrounds said rotary profile. On this edge of a certain thickness, which will generally be substantially perpendicular to the contact surface of the rotary profile, an indentation or groove can be made which will be delimited by two side walls, one of these two walls being in contact with the surface of the rotary profile. One or more grooves may be made on one or both edges of the sleeve.

In accordance with another feature directly related to the one described in the previous paragraph, at least one of the edges has a single groove extending around the perimeter of the edge surrounding the rotary profile, closing in on itself.

It is also envisaged that, in one embodiment, the sleeve is made up of a single piece and, in another embodiment, it may be made up of a plurality of independent parts but which, when assembled between the rotary profile and the rolling mount, form a functional unit in terms of its damping character. These different options facilitate the assembly of the sleeve according to the specific cases of the rolling mount, bearing bracket, rotary profile, etc.

In particular, in another preferred embodiment, the damping sleeve is made up of two independent parts in such a configuration that one of these two parts is located on one side of a plane that longitudinally cuts through the rotary profile and the other is located on the other side of said plane. The two parts may touch each other when assembled or have a gap between their ends.

Finally, according to another feature of the invention, the material making up the damping sleeve may at least partially comprise rubber.

### Description of the figures

The following is a list of drawings used to illustrate the detailed explanation of the invention. In said drawings:
Figure 1 is a front perspective view of the bearing assembly of the invention attached to a support pillar and with a rotary profile mounted thereon.

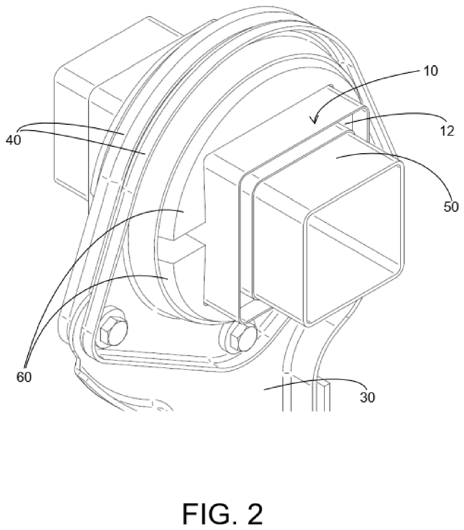

Figure 2 is an enlarged detail of figure 1, centred on the bearing assembly.

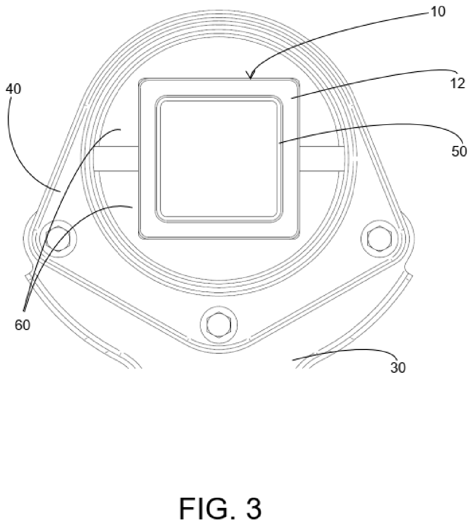

Figure 3 is a front view of the detail shown in figure 2.

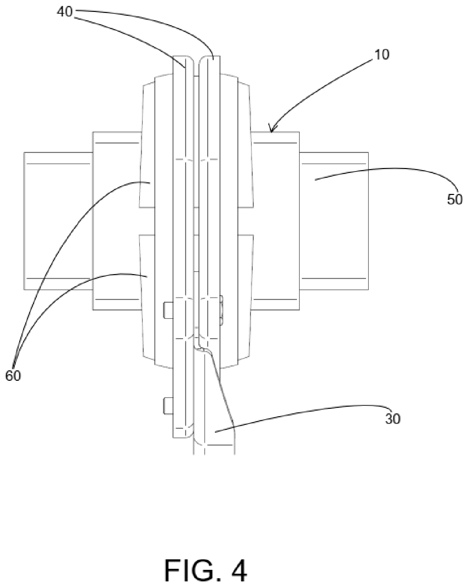

Figure 4 is a lateral view of the detail shown in figures 2 and 3.

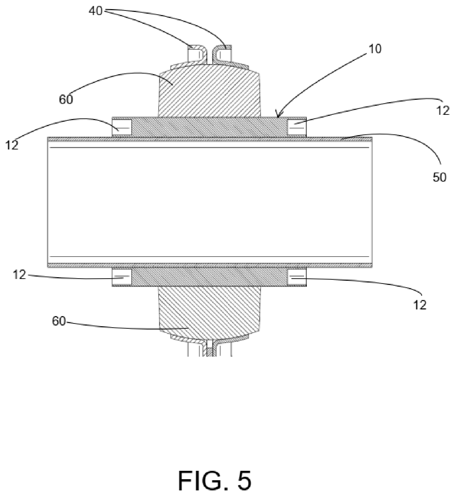

Figure 5 is a cross-sectional view of the bearing assembly of figure 2 according to a vertical cutting plane perpendicular to the surface of the lower bearing bracket or support profile.

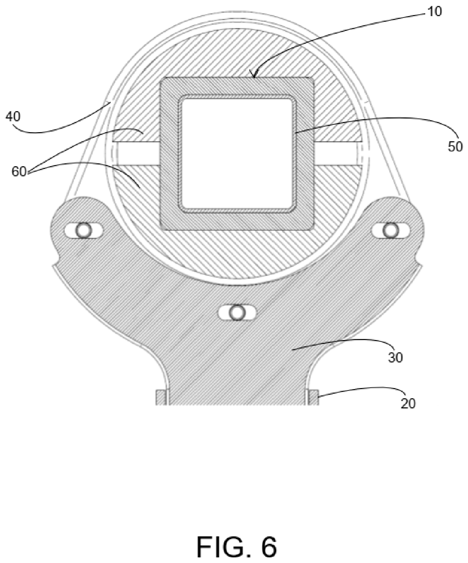

Figure 6 is a cross-sectional view of the bearing assembly of figure 2 according to a cutting plane parallel to the surface of the lower bearing bracket and sectioning the latter into two portions.

### Detailed description of the invention

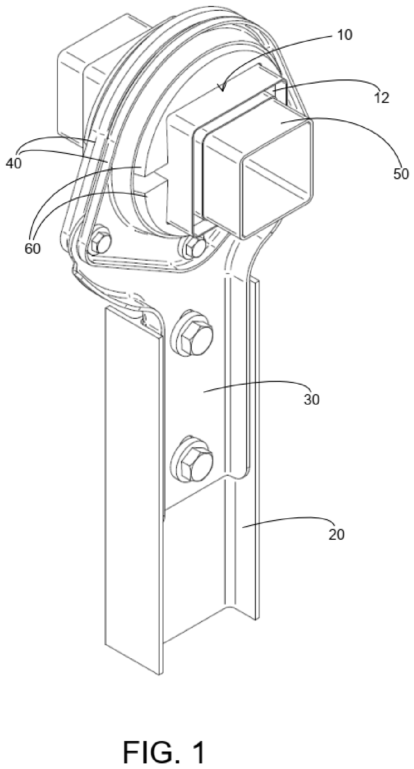

Figure 1 shows a perspective view of the bearing assembly of the present invention mounted on a support pillar (20) and with a rotary profile (50) encased therein. The support pillar (20) is shown only in its upper portion, and is understood to be an elongated profile or column extending downwards to be attached to the ground; similarly, the rotary profile (50) is shown only in the area next to the bearing assembly, being understood to extend at one or both ends and which may be additionally mounted on other bearing assemblies of the type illustrated herein or of a different type. The successive figures show views of the same arrangement of figure 1 from different perspectives or in different cross sections to illustrate the details.

In this case, the rotary profile (50) is connected to the support pillar (20) via a bearing bracket (30, 40) comprising a lower bracket (30) and two upper fasteners (40); these two fasteners (40) are identical and can be interchanged on one side or the other of the lower bracket (30), for which reason the same reference, 40, is used for their designation. The assembly also includes a generically called rolling mount (60), which, in this specific case, comprises two hemispheres which, in the same way as the two upper fasteners (40), could be the identical to each other and therefore interchangeable in their position around the rotary profile (50). The support elements (30, 40, 60) described here are merely an example of constituent elements of the bearing assembly to which the novel features of this invention can be applied; it is clear from the technical elements which will be detailed below that they can be implemented in bracket elements other than those illustrated herein (30, 40, 60).

Specifically, the invention includes a damping sleeve (10) that is interposed between the rotary profile (50) and the rolling mount (60). In known bearing assemblies, the metal rotary profile (50) and the rolling mount (60) (of whatever type) are normally in direct contact, at least partially, and this results in an abrupt transmission of the accelerations transmitted between the two elements, since they are made of essentially rigid materials. This damping sleeve (10) has compressibility and elastic recovery characteristics that allow it to absorb those impacts due to sudden changes in relative velocity between the profile (50) and the mount (60), while maintaining the necessary firm grip on the profile (50).

To this end, the material of the damping sleeve (10) may partially be or include some type of rubber that is able to withstand the weathering of an outdoor environment and the various repeated impacts against the rotary profile (50) and the rolling mount (60) to which it is subjected in its daily operation. These materials are known in the art and are therefore not described in detail herein.

In a preferred embodiment, the damping sleeve (10) comprises one or more grooves (12) on one or both end edges surrounding the rotary profile (50); these grooves (12) are defined by two side walls: one in direct contact with the outer surface of the corresponding rotary profile (50) and another one further away from said outer surface. The grooves (12) serve to protect the bulk of the material of the sleeve (10) when it is compressed between the rolling mount (60) and the profile (50) to thus prevent the same from being cut by the metal edges. In addition, this groove (12) prevents the damping sleeve (10) from becoming detached. In the illustrated case, each end edge of the sleeve (10) comprises a single groove (12) running around the entire perimeter of the corresponding end edge. Other embodiments could be conceivable in which the groove (12) is present in a number greater than one on one or both end edges, for example, two or more grooves (12) longitudinally interrupted along the perimeter contour; these interruption sections of the possible grooves (12) could also be of different lengths and the grooves (12) themselves could have different widths.

In another preferred embodiment, one or more bonding agents are provided at the junction between the damping sleeve (10) and the rotary profile (50), preferably on the inner surface of the sleeve (10) intended to be in contact with the rotary profile (50). This facilitates gripping between the two elements (10 and 50), and the groove or grooves (12) help to prevent the sleeve (10) from becoming detached when the latter is compressed.

Regarding the assembly of the sleeve (10) during the installation of the photovoltaic panels on a solar tracker, in this case, the lower bracket (30) would first be attached to the support pillar (20), e.g. with the appropriate screws, as can best be seen in figure 1. The entire upper part (including the bearing assembly) is then assembled on the rotary profile (50). For this purpose, the sleeve (10) is first made to fit around the profile (50) so that the first must have an inner contour at least partially in alignment with the outer contour of said profile (50) with a view to absorbing impacts or sudden relative movements; the usual profiles (50) are rectangular in cross section but, from the wording of the claims, it is understood that any other cross-section shape is covered. The rolling mount (60) would then be mounted in contact with the outside of the damping sleeve (10); the outer surface of the sleeve (10) or the inner surface of the rolling mount (60) could also have some kind of adhesive, as a temporary attachment element, which could be useful in particular in cases where said rolling mount (60) consists of several physically separate elements or parts (as in the illustrated example) in order to attach its position on the sleeve (10) until the final coupling of the upper fasteners (40).

Finally, the aforementioned coupling between the fasteners (40) would be made by pressing the mount (60) against the sleeve (10) and thus against the rotary profile (50). It is worth mentioning here that the arrangement and shape of the upper fasteners (40), as well as the way they are connected to the lower bracket (30), could be different from those mentioned and illustrated in the present drawings, since other forms of these elements are known that allow the positioning of the sleeve (10) described herein; the only thing that would change would be the manner of assembly, or the order of the assembly steps, since the technical characteristic in the form of a damping sleeve (10) described in the claims could still be used. For example, the upper fasteners (40) could be arch-shaped, rather than in a closed loop, or they could be in a number other than two. The same applies to the bottom bracket (30) and the rolling mount (60). Once the external elements (40, 60) surrounding the sleeve (10) have been adjusted, all that remains is to attach this assembly to the lower bracket (30), in this case also by means of the screws visible in the different figures.

As mentioned in the claims, the sleeve (10) could be provided in the form of two or more independent parts which would be assembled around the rotary profile (50) by embracing the latter on all or part of its outer contour. This option would make it easier to assemble the bearing assembly in areas further away from the ends of the rotary profile (50), and different variants of the bearing assembly disclosed herein could be combined in the same solar tracker.

## Claims

1. A bearing assembly for solar tracker rotary profiles (50), of the type comprising a bearing bracket (30, 40) and a rolling mount (60) adapted to rotate relative to the bracket (30, 40) and to support a rotary profile (50), said bearing assembly further comprising a damping sleeve (10) interposed between the rolling mount (60) and the rotary profile (50) so as to at least partially absorb the impacts between these elements (60, 50) due to their relative displacement.

2. The bearing assembly according to claim 1, wherein the inner surface of the damping sleeve (10) intended to be in contact with the outer surface of the rotary profile (50) and/or said outer contact surface of the rotary profile is (are) at least partially bonded.

3. The bearing assembly according to any of claims 1 to 2, wherein the damping sleeve (10) comprises, open on the surface of at least one of its edge contours surrounding the rotary profile (50), at least one groove (12) formed by two delimiting side walls wherein one of said side walls is in contact with the corresponding surface of the rotary profile (50).

4. The bearing assembly according to claim 3, wherein the at least one groove (12) runs uninterruptedly along the entire corresponding edge contour of the damping sleeve (10) surrounding the rotary profile (50).

5. The bearing assembly according to any of claims 1 to 4, wherein the damping sleeve (10) is made up of a single piece.

6. The bearing assembly according to any of claims 1 to 4, wherein the damping sleeve (10) comprises at least two independent parts.

7. The bearing assembly according to claim 6, wherein the damping sleeve (10) consists of two independent parts such that one of them surrounds a section of the outer perimeter contour of the rotary profile (50) section and the other surrounds at least part of the remaining section of said outer perimeter contour.

8. The bearing assembly according to any of the preceding claims, wherein the material of the damping sleeve (10) comprises rubber.
